# EUROPEAN PATENT APPLICATION

(11) **EP 4 653 325 A1**
(43) Date of publication of application: **26.11.2025**
(21) Application number: 25173966.0
(22) Date of filing: 02.05.2025
(51) Int. Cl.: B64F 5/60, G01M 15/14

(54) **APPARATUS AND METHOD FOR MEASURING MECHANICAL STRAIN**

(30) Priority: 24.05.2024 US 202418673641
(71) Applicant: General Electric Company, Cincinnati, Ohio 45215 (US)
(72) Inventor: ESLER, David Richard, Niskayuna, 12309 (US); IANNOTTI, Joseph Alfred, Niskayuna, 12309 (US); KAPUSTA, Christopher, Niskayuna, 12309 (US); KOSTE, Glen Peter, Niskayuna, 12309 (US); AIMI, Marco Francesco, Niskayuna, 12309 (US); JACOBS, Douglas Scott, Lynn, 01910 (US)
(74) Representative: Openshaw & Co.

(57) **Abstract**

A strain sensing assembly (202) includes a sensor substrate (208) bonded to a strain sensing element (206), where the sensor substrate (208) is captured in a capture pocket (215) formed by a first fixture pin (212) and a second fixture pin (214) with a turbine engine component. A bonding material may be disposed in the capture pocket (215) to affix the sensor substrate (208) to the turbine engine component and first fixture pin (212)/second fixture pin (214). In some forms, the bonding material is located between the first fixture pin (212) and the sensor substrate (208). Compressive strain from the first fixture pin (212) can be transferred through the bonding material to the sensor substrate (208). In other forms, the sensor substrate (208) is in direct mechanical contact with the first fixture pin (212). Compressive strain from the first fixture pin (212) can be transferred directly to the sensor substrate (208).

## Description

### FIELD

The present disclosure relates to a strain sensing assembly useful to measure mechanical strain.

### BACKGROUND

A gas turbine engine generally includes a turbomachine and a rotor assembly. Gas turbine engines, such as turbofan engines, may be used for aircraft propulsion, and in that regard are subjected to loads which result in stress and strain in components. It is desirable to measure loads in turbine engine components to ensure safe operation and monitor component health. Improvements to strain sensing systems would be useful in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine useful for providing propulsive power to an aircraft in accordance with an exemplary aspect of the present disclosure.
FIG. 2 is a schematic of a strain sensing assembly in accordance with another exemplary aspect of the present disclosure.
FIG. 3 is a schematic view of a strain sensing assembly in accordance with another exemplary aspect of the present disclosure.
FIG. 4A is a schematic view of a strain sensing assembly in accordance with another exemplary aspect of the present disclosure.
FIG. 4b is a schematic view of a strain sensing assembly in accordance with another exemplary aspect of the present disclosure.
FIG. 5A is a schematic view of a strain sensing assembly in accordance with another exemplary aspect of the present disclosure.
FIG. 5B is a schematic view of a strain sensing assembly in accordance with another exemplary aspect of the present disclosure.
FIG. 6 is a schematic view of a strain sensing assembly in accordance with another exemplary aspect of the present disclosure.
FIG. 7 is a schematic view of a strain sensing assembly in accordance with another exemplary aspect of the present disclosure.
FIG. 8 is a schematic view of a strain sensing assembly in accordance with another exemplary aspect of the present disclosure.
FIG. 9 is a schematic view of a strain sensing assembly in accordance with another exemplary aspect of the present disclosure.
FIG. 10 is a schematic view of a strain sensing assembly in accordance with another exemplary aspect of the present disclosure.
FIG. 11 is a schematic view of a sensor substrate and strain sensing element in accordance with another exemplary aspect of the present disclosure.
FIG. 12A is a schematic view of a sensor assembly in accordance with another exemplary aspect of the present disclosure.
FIG. 12B is a schematic view of a strain sensing assembly in accordance with another exemplary aspect of the present disclosure.
FIG. 13 is a schematic view of a strain sensing assembly in accordance with another exemplary aspect of the present disclosure.
FIG. 14 is a schematic view of a computing device in accordance with another exemplary aspect of the present disclosure.
FIG. 15 is a flow chart describing a method for making a strain sensing assembly in accordance with the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "axial" and "axially" refer to directions and orientations that extend substantially parallel to a reference axis. Moreover, the terms "radial" and "radially" refer to directions and orientations that extend substantially perpendicular to the reference axis. In addition, as used herein, the terms "circumferential" and "circumferentially" refer to directions and orientations that extend arcuately about the reference axis.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first", "second", and "third" may be used interchangeably to distinguish one component from another and are not intended to signify location or importance of the individual components.

A "third stream" as used herein means a non-primary air stream capable of increasing fluid energy to produce a minority of total propulsion system thrust. The third stream may generally receive inlet air (air from a ducted passage downstream of a primary fan) instead of freestream air (as the primary fan would). A pressure ratio of the third stream may be higher than that of the primary propulsion stream (e.g., a bypass or propeller driven propulsion stream). The thrust may be produced through a dedicated nozzle or through mixing of an airflow through the third stream with a primary propulsion stream or a core air stream, e.g., into a common nozzle.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As will be discussed in more detail below, the subject matter of the present disclosure is directed generally to a strain sensing assembly useful to measure strain in a turbine engine component. Strain measurements can be used to determine temperature, strain, frequency, torque, speed, or combinations thereof, and may used for engine control or health monitoring. It will be appreciated that the determination of any of temperature, strain, frequency, torque, speed, or combinations thereof can be calculated directly from a strain measurement, where such strain measurement is determined from an electrical output of the strain sensing assembly. The strain sensing assembly can include first fixture pin and second fixture pin that create a capture pocket with the turbine engine component. A sensor substate can be located in the capture pocket and held in place by compressive strain between the first fixture pin, second fixture pin, and turbine engine component. A strain sensing element can be bonded to the sensor substrate. In one form a bonding material is located between the first fixture pin and turbine engine component, where the compressive strain is transferred through the bonding material. In another form, the sensor substrate is in direct contact with the first fixture pin such that compressive strain is transferred directly from the first fixture pin to the sensor substrate.

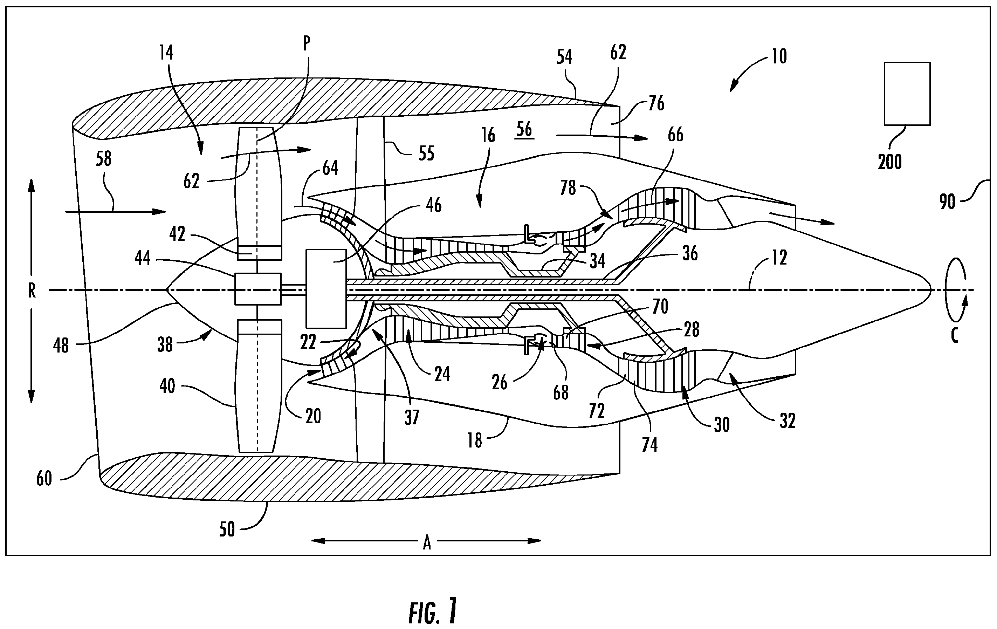

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and jet exhaust nozzle section 32 together define a working gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are together rotatable about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 1, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the working gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, which supports operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, which supports operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary gas turbine engine 10 depicted in FIG. 1 is by way of example only, and that in other exemplary embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gear box 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

In one form, the gas turbine engine 10 can be used as a prime mover for an aircraft 90 to provide propulsive power for the aircraft 161. In still other forms, the gas turbine engine 10 can be used in other applications, whether related to a powerplant for transportation or as an engine used for stationary power generation purposes.

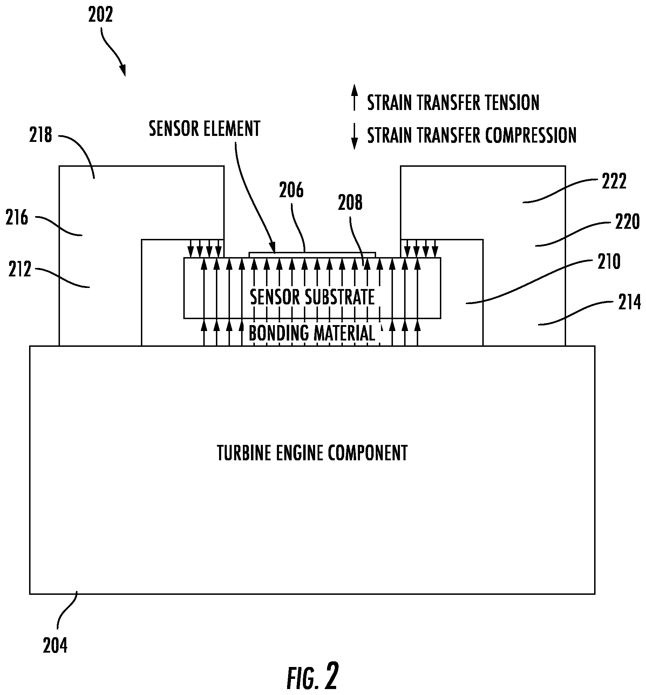

Turning now to FIG. 2, an embodiment of a strain sensing assembly 202 is affixed to a turbine engine component 204 which can include a rotatable shaft (e.g., a rotatable shaft such as HP shaft 34 and/or LP shaft 36 and/or any other suitable structure). It will be appreciated that the strain sensing assembly 202 can be affixed to any suitable structure, such as any structure associated with an aerospace propulsion system, a power generation system, or an automotive system (any one of which can be considered a propulsion system). In this manner, the rotatable shaft to which the strain sensing assembly 202 is affixed can be a shaft of a propulsion system. Additionally and/or alternatively, the rotatable shaft can be any one of a gearbox shaft, a power take-off shaft, a low pressure turbine shaft, a high pressure turbine shaft, a fan shaft, or an engine coupling shaft of the propulsion system.

The strain sensing assembly 202 is configured to react to mechanical strain in the turbine engine component 204 and produce a signal indicative of the strain. The signal produced from the strain sensing assembly 202 can be transmitted to the engine controller 200 or any other suitable device (e.g., a computing device, discussed further below) for use and/or for further processing. For example, in some embodiments, the signal may represent a measured strain in the turbine engine component 204, while, in other embodiments, the signal may be further processed using, for example, a calibration curve to create a measured strain or torque.

The strain sensing assembly 202 includes a strain sensing element 206 coupled to a sensor substrate 208. The strain sensing element 206 is configured to be responsive to dimensional changes associated with strain that is transferred from the turbine engine component 204, through the sensor substrate 208, and to the strain sensing element 206. The strain sensing element 206 can take any variety of forms, including a strain gauge. **In** one form the strain sensing element 206 takes the form of a surface acoustic wave (SAW) strain sensor. **In** another form, the strain sensing element 206 can be a bulk acoustic wave (BAW) sensor. **In** some embodiments, the strain sensing assembly 202 can be configured to wirelessly transmit a signal indicative of strain, which can include a raw signal generated from the strain sensing element 206 or a calculated signal based on the raw signal.

**In** some embodiments, the sensor substrate 208 has a material that approximates the modulus of elasticity of the turbine engine component 204. For example, the sensor substrate 208 can have a modulus of elasticity within 1% of the modulus of elasticity of the turbine engine component 204. **In** other embodiments, the sensor substrate 208 can have a modulus of elasticity within 5% of the modulus of elasticity of the turbine engine component 204. **In** still further embodiments, the sensor substrate 208 can have a modulus of elasticity within 10% of the modulus of elasticity of the turbine engine component 204. **In** one form, the sensor substrate 208 is made of quartz.

The strain sensing element 206 can be bonded and/or otherwise formed to the sensor substrate using any suitable technique. In one form the sensing element 206 is bonded to the sensor substrate by virtue of a manufacturing process that deposits the sensing element 206. To set forth just two non-limiting examples, the sensing element 206 can be deposited using a wafer level process such as sputter deposition or photolithography. The sensor substrate 208 can be bonded to the turbine engine component 204 using any suitable technique such as chemical bonding, including bonding material 210. Whichever type of chemical bonding material is used to bond the sensor substrate 208 to the turbine engine component 204, the chemical bonding material is contemplated to have a high modulus of elasticity and be applied as a relatively thin layer. For example, the chemical bonding material used to bond the sensor substrate 208 to the turbine engine component 204 is contemplated to have modulus of elasticity of between 5GPA - 200GPA in some applications, between 50GPA-150GPA in other applications, and between 75GPA-125GPA in other applications. Furthermore, the chemical bonding material used to bond the sensor substrate 208 to the turbine engine component 204 is contemplated to have a bond thickness between 5µm-250µm in some applications, 50µm-200µm in other applications, and 100µm-150µm in still other applications. Still further, the chemical bonding material used to bond the sensor substrate 208 to the turbine engine component 204 is contemplated to have a glass transition temperature greater than 190C. In some embodiments, the chemical bonding material used to bond the sensor substrate 208 to the turbine engine component 204 can be cured in a zero stress state at a temperature corresponding to an expected operating temperature of the turbine engine component 204. In still other embodiments disclosed elsewhere herein, the sensor substate 208 may be mechanically retained against the turbine engine component 204 without use of a chemical bonding material.

The strain sensing assembly 202 includes a first fixture pin 212 and a second fixture pin 214 that assist in forming a capture pocket 215 useful to form a structure that captures and forms a pocket useful to retain the sensor substrate 208 and/or the bonding material 210. The first fixture pin 212 and/or second fixture pin 214 can extend fully or partially along an edge of the sensor substate 208 (e.g., as viewed in a direction into the page as depicted in FIG. 2). The first fixture pin 212 can include a first side leg 216 and a first top 218. The second fixture pin 214 can include a second side leg 220 and a second top 222. These pins can also surround all four sides of the sensor, and be welded, soldered, or brazed on. This pocket can also be filled with a solder, braze, epoxy, or other moldable material. In addition, these pins may be removeable, such as bolts. As can be seen in the embodiment depicted in FIG. 2, the bonding material 210 can be located not only between the sensor substrate 208 and the turbine engine component 204, but also between both of the first top 218 and second top 222 and the sensor substrate 208. In this manner, the bonding material 210 at least partially encapsulates the sensor substrate 208, without covering the sensing element. Strain that is imparted to the turbine engine component 204 can be transferred in tension through the bonding material and to the sensor substrate 208, and can be transferred in compression from each of the first top 218 and second top 222, through the bonding material 210, and to the sensor substrate 208.

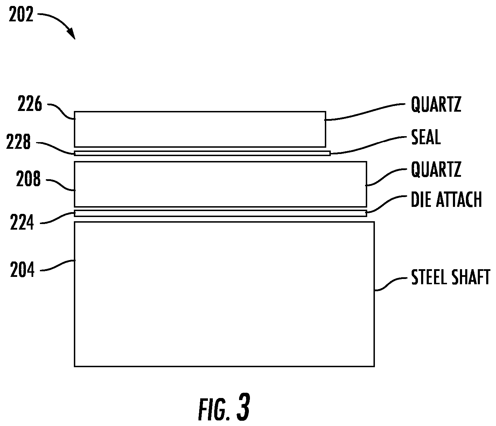

Turning now to FIG. 3, an alternative and/or additional embodiment of the strain sensing assembly 202 is depicted which includes a die attachment 224 useful to couple the sensor substate 208 to the turbine engine component 204. In some embodiments, the die attachment 224 is the same as the bonding material 210 depicted, for example, in FIG. 2. FIG. 3 also depicts use of a lid 226 and seal 228 useful to protect the strain sensing element 206 which, although not depicted, can be located between the seal 228 and the sensor substrate 208. In one embodiment, the lid can be made of a quartz material. The sensor substrate can also be made of a quartz material and have a thickness between 100 and 500 micrometers (µm). The die attachment 224 shows a bonding material generally in tension, not compression. Also as depicted, in one form the turbine engine component can be made of metals such as steel. In the illustration of FIG. 3, the stack of components (e.g., the stack of the lid 226, seal 228, sensor substrate 208, and die attachment 224) can take on a variety of overall thicknesses. For example, in some embodiments the thickness of the stack can be any value from 0.25 millimeters to 1 millimeter. In other embodiments the thickness of the stack can be any value from 0.5 millimeters to 0.75 millimeters.

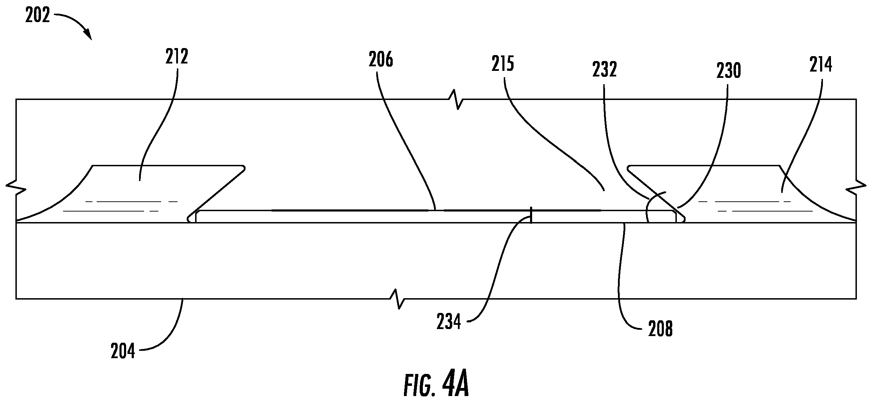

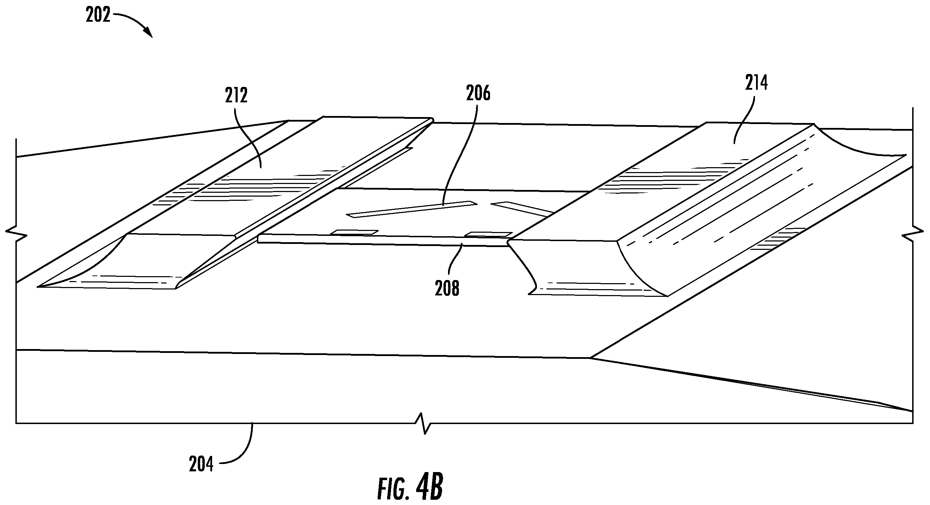

Turning now to FIGS. 4A and 4b, another embodiment of the strain sensing assembly 202 is depicted in which the first fixture pin 212 and second fixture pin 214 are used to mechanically capture the sensor substrate 208. The first fixture pin 212 and second fixture pin 214 can be unitary with the turbine engine component 204 (e.g., it can be integral such as machined from material originally present in the turbine engine component 204), or can be integrated (e.g., separately made, but coupled through mechanical fasteners, chemical bonding, metallurgical bonding, etc.). A capture pocket 215 can be formed between first fixture pin 212, second fixture pin 214, and the turbine engine component 204. To mechanically capture the sensor substrate 208, the capture pocket 215 can be heated to increase a size between the first fixture pin 212, second fixture pin 214, and the turbine engine component 204 to permit installation of the sensor substrate 208. While in a heated state, the sensor substrate 208 can, for example, be slidingly inserted into the capture pocket 215. When cooled, the mechanical interaction between the sensor substrate 208, first fixture pin 212, second fixture pin 214, and the turbine engine component 204 can act like a dovetail joint discouraging removal of the sensor substrate 208. The sensor substrate 208 can furthermore be made of a material having a similar coefficient of thermal expansion (CoE) similar to a CoE of any one or more of the first fixture pin 212, second fixture pin 214, and the turbine engine component 204. For example, the CoE of the sensor substrate 208 can be within 1% of the CoE of any one or more of the first fixture pin 212, second fixture pin 214, and the turbine engine component 204. **In** other embodiments, the CoE of the sensor substrate 208 can be within 5% of the CoE of any one or more of the first fixture pin 212, second fixture pin 214, and the turbine engine component 204. **In** still further embodiments, the CoE of the sensor substrate 208 can be within 10% of the CoE of any one or more of the first fixture pin 212, second fixture pin 214, and the turbine engine component 204. During elevated operating temperatures, the capture pocket 215 can expand sufficiently to accommodate an expansion of the sensor substrate 208 without imparting undue stress into the sensor substrate 208 in case of one type of mismatch in CoE, or without compromising the mechanical capture of the sensor substrate 208 with another type of mismatch in CoE. It is contemplated that the sensor substrate 208 is captured within the capture pocket 215 such that compressive stress is applied to it via the first fixture pin 212, second fixture pin 214, and turbine engine component 204. This instance has the benefit of improved reliability since many materials perform better in compression than tension.

The sensor substate 208 can include a chamfered edge 230 sized to match a substrate capture angle 232 formed between the first fixture pin 212 and the turbine engine component 204 (e.g., formed between the turbine engine component 204 and a surface of the first fixture pin 212 that mechanically couples with the sensor substrate). Note that another capture angle 232 is also formed between the second fixture pin 214 and the turbine engine component 204 (e.g., formed between the turbine engine component 204 and a surface of the second fixture pin 214 that mechanically couples with the sensor substrate). The capture angle 232 formed between the second fixture pin 214 and the turbine engine component 204 can be the same or different to the capture angle 232 formed between the second fixture pin 214 and the turbine engine component 204. Similarly, the sensor substrate 208 can include another chamfered edge to match capture angle 232 formed between the second fixture pin 214 and the turbine engine component 204. As will be appreciated, the capture angle 232 is formed by the orientation of the first fixture pin 212 (or alternatively the second fixture pin 214) relative to the turbine engine component 204. The first fixture pin 212 (or alternatively the second fixture pin 214) extends away from the turbine engine component 204 in a general direction as that of a thickness 234 of the sensor substrate 208 (e.g., in a thickness direction of the thickness 234). The angle of the surface of the first fixture pin 212 (or alternatively the surface of second fixture pin 214) that mechanically couples the sensor substrate 208 generally extends away from the turbine engine component 204 and toward an interior of the sensor substrate 208. Extension of the surface of the first fixture pin 212 (or alternatively the surface of second fixture pin 214) toward an interior of the sensor substrate 208 can be in a direction generally along a lateral dimension of the sensor substrate 208 (e.g., in a lateral direction of a lateral dimension of the sensor substrate 208).

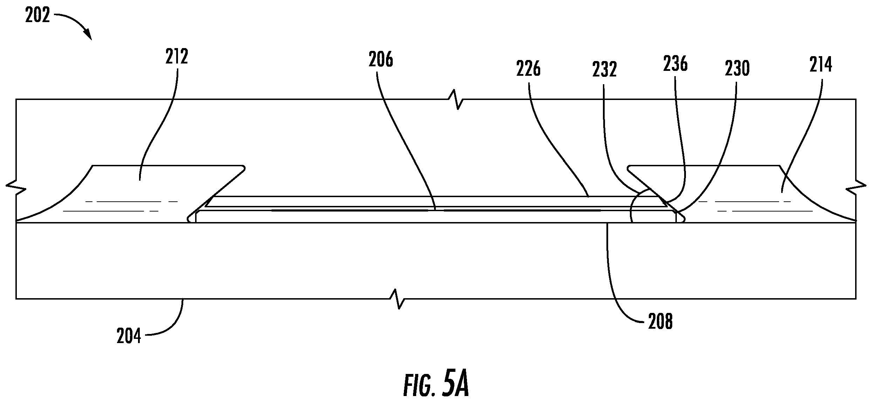

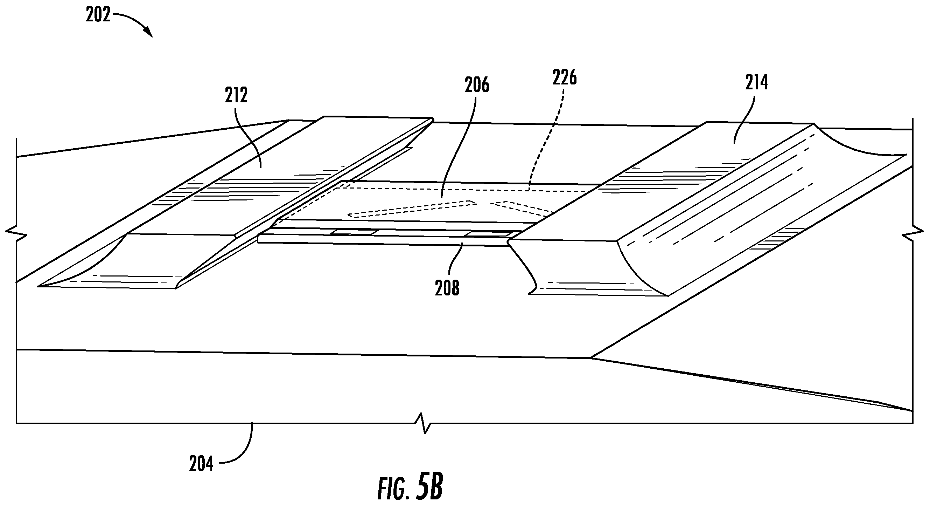

Turning now to FIGS. 5A and 5B, an embodiment is depicted similar to FIGS. 4A and 4B, with the exception of the lid 226. The lid 226 can include a lid chamfer 236 sized to match the substrate capture angle 232 formed between the first fixture pin 212 and the turbine engine component 204 (e.g., formed between the turbine engine component 204 and a surface of the first fixture pin 212 that mechanically couples with the sensor substrate). Note that the lid 226 can also include a lid chamfer 236 on the side that mechanically couples with the second fixture pin 214.

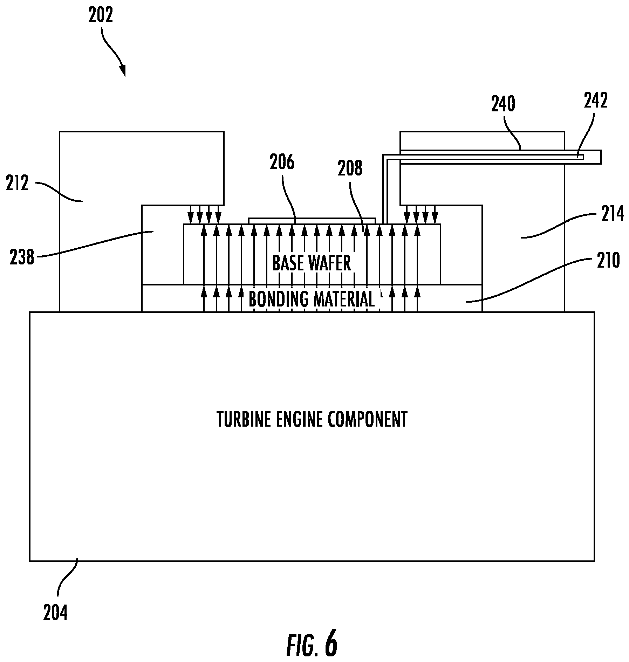

FIG. 6 depicts an embodiment similar to FIG. 2 but including a second bonding material 238 used to at least partially encapsulate the sensor substrate 208. As above, the bonding material 210 can be a material having high modulus and capable of operation in elevated temperatures of a gas turbine engine. The bonding material 210 can have a relatively high adhesion strength and low viscosity to provide a thin bondline formation. In one embodiment, the bonding material 210 can be made of the same material having the same characteristics used to bond the sensor substrate 208 to the turbine engine component 204 described above. In one form, the bonding material 210 and/or bonding material used to bond the sensor substrate 208 to the turbine engine component 204 can have a viscosity in the range of 10-100 centipoise. In another embodiment, the bonding material 210 and/or bonding material used to bond the sensor substrate 208 to the turbine engine component 204 can have a viscosity in the range of 25-75 centipoise. In still another embodiment, the bonding material 210 and/or bonding material used to bond the sensor substrate 208 to the turbine engine component 204 can have a viscosity in the range of 40-60 centipoise. Still further, in one embodiment, the bonding material 210 and/or bonding material used to bond the sensor substrate 208 to the turbine engine component 204 can have an adhesion strength of 1000 - 3000 pounds per square inch (psi). In another embodiment, the bonding material 210 and/or bonding material used to bond the sensor substrate 208 to the turbine engine component 204 can have an adhesion strength of 1500psi - 2500psi. In yet another embodiment, the bonding material 210 and/or bonding material used to bond the sensor substrate 208 to the turbine engine component 204 can have an adhesion strength of 1750psi - 2250psi. In still yet another form, the bonding material 210 and/or bonding material used to bond the sensor substrate 208 to the turbine engine component 204 can have a Young's Modulus between 0.5 gigaPascal - 2 gigaPascal. In another embodiment, the bonding material 210 and/or bonding material used to bond the sensor substrate 208 to the turbine engine component 204 can have a Young's Modulus between 1 gigaPascal - 1.5 gigaPascal. In yet another embodiment, the bonding material 210 and/or bonding material used to bond the sensor substrate 208 to the turbine engine component 204 can have a Young's Modulus between 1.2 gigaPascal - 1.32 gigaPascal.

The second bonding material 238 can be made of a different material than the bonding material 210. The second bonding material 238 can have a relatively higher modulus than bonding material 210, and can have high compressive strength to transfer compression forces from the first fixture pin 212 and second fixture pin 214 to the sensor substrate 208. Further, the second bonding material 238 can include filled materials, ceramic pastes, and high temperature materials. The second bonding material 238 can have a compressive strength between 1 gigaPascal - 200 gigaPascal. In another embodiment, the second bonding material 238 can have a compressive strength between 50 gigaPascal - 150 gigaPascal. In still another embodiment, the second bonding material 238 can have a compressive strength between 75 gigaPascal - 125 gigaPascal. The second bonding material can have a glass transition temperature up to 500 Celsius. In another embodiment, the second bonding material can have a glass transition temperature between 450 Celsius and 550 Celsius. The bondline thickness can have the same thickness and/or range of thickness of the bonding material 210 and/or bonding material used to bond the sensor substrate 208 to the turbine engine component 204. In one form the bondline thickness can have a lower range as the thickness and/or range of thickness of the bonding material 210 and/or bonding material used to bond the sensor substrate 208 to the turbine engine component 204, with an upper range of 250 microns. The cure temperature of the second bonding material 238 can be 200 Celsius. In another embodiment, the cure temperature of the second bonding material 238 can be 225 Celsius. In still another embodiment, the cure temperature of the second bonding material 238 can be 250 Celsius. It will be noted that in many embodiments, the second bonding material 238 is cured at a zero stress state. Further, the second bonding material 238 is cured at a higher temperature than the expected operating temperature of the turbine engine component 204. The second bonding material 238 can include a filler material such as silica, silicate, or ceramic. In one form, the second bonding material 238 can be a nonconductive epoxy resin having inorganic fillers in an organic or inorganic base material. In one embodiment, the second bonding materials 238 can be a material such as Stycast produced by HENKEL AG & CO. KGAA at HENKELSTRASSE 67, DUSSELDORF GERMANY 40589. In some forms the filler material used in the second bonding material 238 can be calcium carbonate, talc, silica, wollastonite, mica, glass beads, alumina trihydrate, clay, kaolin and carbon.

Further to the above, the strain sensing assembly can include a conduit 240 formed through the first fixture pin 212 useful to route at least one lead line 242 that electrically couples the strain sensing element 206 to a suitable receiving device, such as a transmitter, computing device, etc.

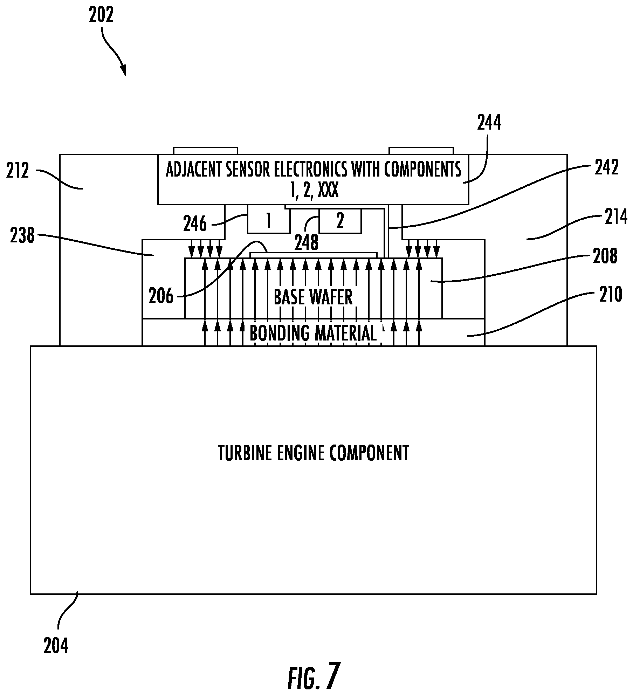

FIG. 7 depicts an embodiment in which the strain sensing element 206 is in electric communication with a sensor transmitter 244 that bridges between the first fixture pin 212 and second fixture pin 214. The sensor transmitter 244 is configured to receive the signal indicative of strain from the strain sensing element 206 and process the signal for wireless transmission to any suitable receiving device (e.g., a computing device, discussed further below). The sensor transmitter 244 may include any required electronics and power source suitable to provide electrical energy to the strain sensing element 206. For example, the sensor transmitter 244 may include a battery 246 and power electronics 248 useful to provide a voltage and/or current to the strain sensing element 206 appropriate to the type of strain sensing element 206. The sensor transmitter 244 may have an appropriate radio frequency (RF) antenna useful to transmit a signal indicative of the strain (e.g., transmit the raw and/or calculated signal from the strain sensing element 206).

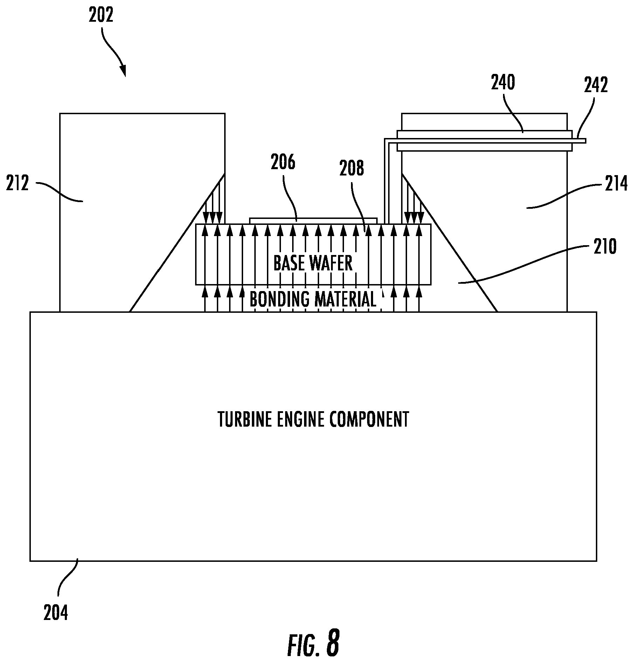

FIG. 8 depicts an embodiment in which the first fixture pin 212 and second fixture pin 214 have an inclined surface used to form the capture pocket 215 similar to the surfaces on the first fixture pin 212 and second fixture pin 214 of FIGS. 4A-5B. In the illustrated embodiment of FIG. 8, however, the sensor substrate 208 may not include the chamfered edge 230 depicted in FIGS. 4A-5B. Compressive stress is imparted to the sensor substrate 208 from the first fixture pin 212 and second fixture pin 214 through the bonding material 210.

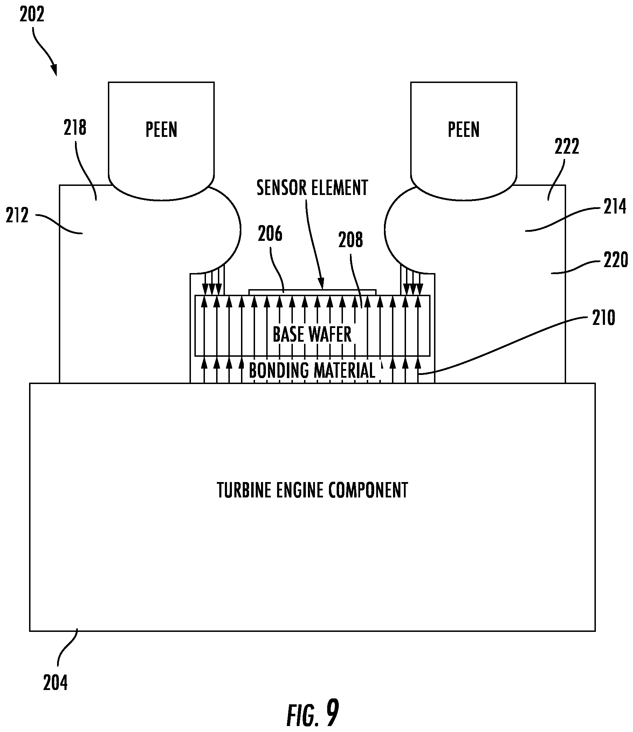

FIG. 9 depicts an embodiment in which the first fixture pin 212 and second fixture pin 214 are subjected to a peening process to create the first top 218 and second top 222. In other embodiments, the first top 218 and second top 222 can be machined in place or affixed to the respective first leg 216 and second leg 220 via any suitable technique (e.g., mechanical fixtures, chemical bonding, metallurgical bonding, etc.). Compressive stress is imparted to the sensor substrate 208 from the peened region of the first top 218 and second top 222 and via the bonding material 210. Such compressive stress can be used to deform the first top 218 and second top 222.

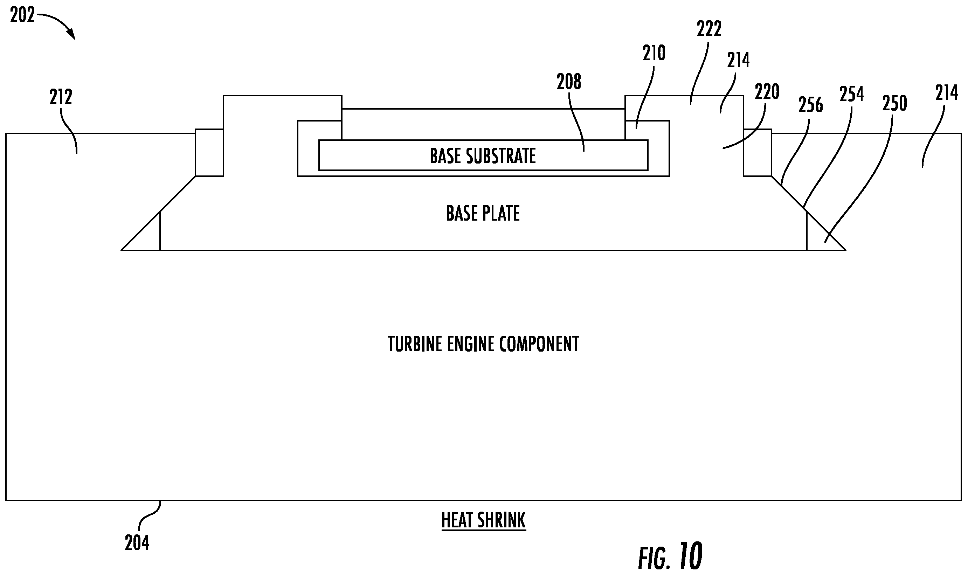

FIG. 10 depicts an embodiment of the strain sensing assembly 202 which is modular and can be inserted into a slot 250 formed in the turbine engine component 204. The strain sensing assembly 202 can include a chamfered foot 252 that engages an overhang 254 of the slot 250. Similar to the thermal fit of the sensor substrate 208 within the capture pocket 215, the strain sensing assembly 202 of FIG. 10 can be thermally fit within the slot 250.

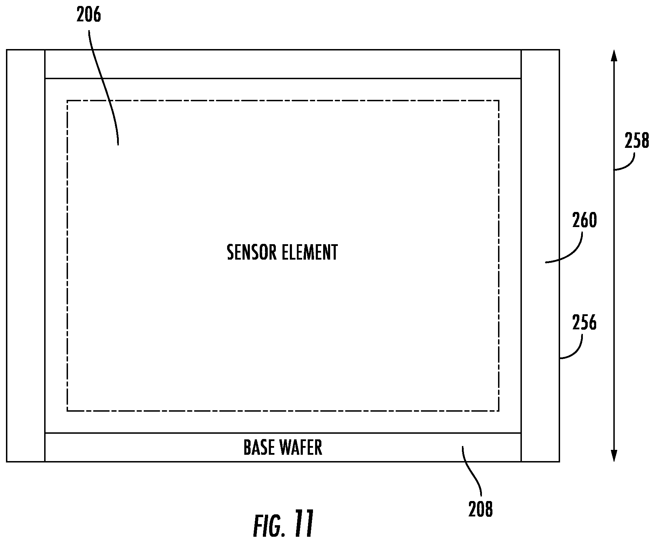

FIG. 11 depicts a top view of the sensor substrate 208 and sensing element 206. As suggested above, the sensor substrate 208 can include a lateral dimension 256 that extends in a lateral direction 258. The strain sensing element 206 is located interior to the outer periphery of the sensor substrate 208. The sensor substrate 208 includes a region 260 that extends laterally beyond an outer periphery of the strain sensing element 206. In the various embodiments described herein, the compressive force from the first fixture pin 212, second fixture pin 214 (either direct pressure or indirect via the bonding material 210) can be applied to the region 260.

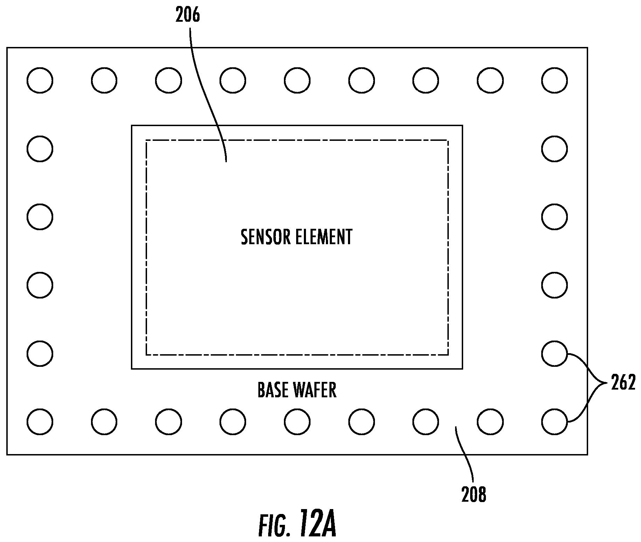

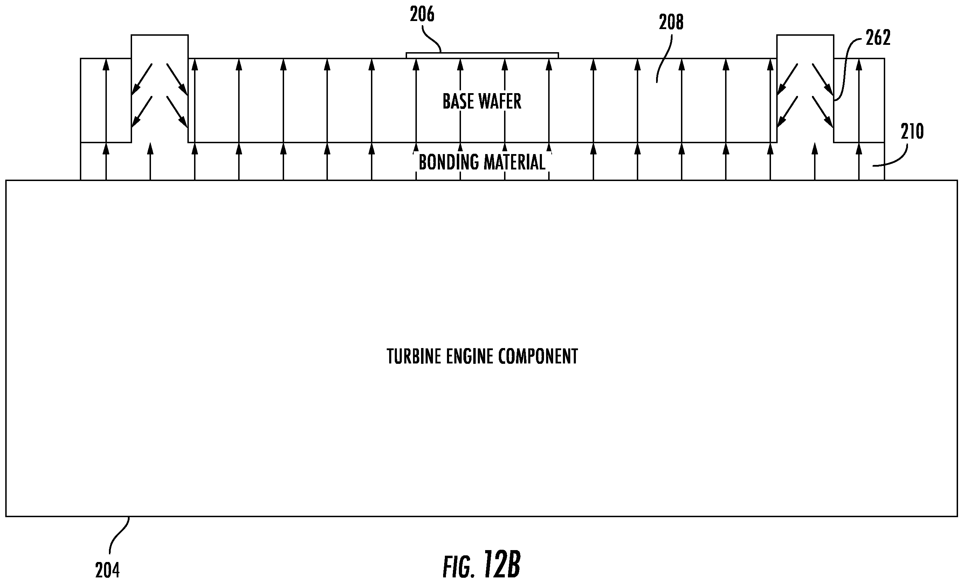

FIGS. 12A-12B depict an embodiment of the sensor substrate 208 which includes apertures 262. Though the apertures 262 are located around the entire periphery of the sensor substrate 208, some embodiments may include fewer aperture 262 arranged along fewer edges of the sensor substrate 208. As shown in FIG. 12B, the bonding material 210 can be located in the apertures 262 and apply downward compressive stress to the sensor substrate 208 via inner surface of the apertures 262.

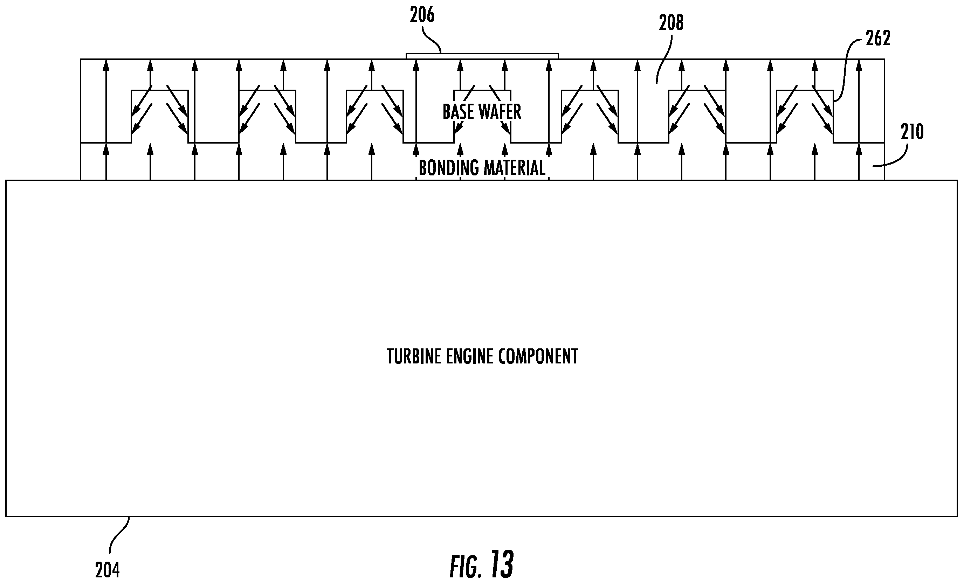

FIG. 13 depicts a similar arrangement to FIG. 11, with the exception that the apertures 262 are not through-apertures (e.g., the through-apertures of FIG. 10), but rather apertures that do not extend through the thickness of the sensor substrate 208. As with the embodiment of FIG. 12B, compressive stress is imparted to the sensor substrate 208 via the bonding material 210 and apertures 262.

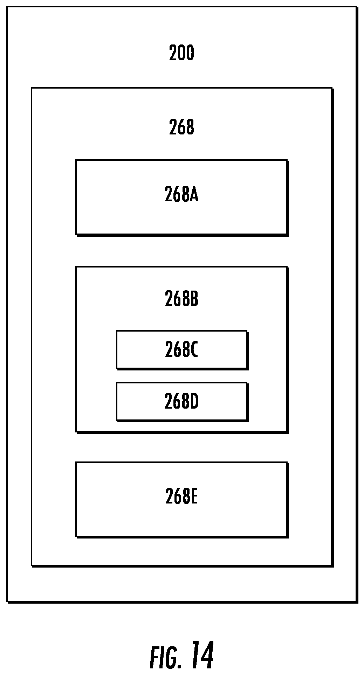

Turning now to FIG. 14, any of the engine controller 200, sensor transmitter 244, etc. that are used to process, transmit, and/or receive the signal indicative of strain in the turbine engine component, can be implemented using a computing device 268, one embodiment of which is illustrated in FIG. 14. For purposes of illustration, FIG. 14 depicts the microcontroller 216, but the description is applicable to any other controller discussed herein. The computing device(s) 268 can include one or more processor(s) 268A and one or more memory device(s) 268B. The one or more processor(s) 268A can include any suitable processing device, such as a microprocessor, microcontroller, integrated circuit, logic device, and/or other suitable processing device. The one or more memory device(s) 268B can include one or more computer-readable media, including, but not limited to, non-transitory computer-readable media, RAM, ROM, hard drives, flash drives, and/or other memory devices.

The one or more memory device(s) 268B can store information accessible by the one or more processor(s) 268A, including computer-readable instructions 268C that can be executed by the one or more processor(s) 268A. The instructions 268C can be any set of instructions that when executed by the one or more processor(s) 268A, cause the one or more processor(s) 268A to perform operations. In some embodiments, the instructions 268C can be executed by the one or more processor(s) 268A to cause the one or more processor(s) 268A to perform operations, such as any of the operations and functions for which the controller and/or the computing device(s) 268 are configured, the operations for any of the aforementioned systems such as the valve 223, etc., as described herein, and/or any other operations or functions of the one or more computing device(s) 268 (e.g., as a full authority digital engine controller). The instructions 268C can be software written in any suitable programming language or can be implemented in hardware. Additionally, and/or alternatively, the instructions 268C can be executed in logically and/or virtually separate threads on the one or more processor(s) 268A. The one or more memory device(s) 268B can further store data 268D that can be accessed by the one or more processor(s) 268A. For example, the data 268D can include data indicative of outside air conditions, power flows, data indicative of engine/ aircraft operating conditions, and/or any other data and/or information described herein. Data 268D can alternatively and/or additional include data including the signal indicative of strain in the turbine engine component.

The computing device(s) 268 can also include a network interface 268E used to communicate, for example, with the other components of the systems described herein (e.g., via a communication network). The network interface 268E can include any suitable components for interfacing with one or more network(s), including for example, transmitters, receivers, ports, controllers, antennas, and/or other suitable components. One or more devices can be configured to receive one or more commands from the computing device(s) 268 or provide one or more commands to the computing device(s) 268.

The network interface 268E can include any suitable components for interfacing with one or more network(s), including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

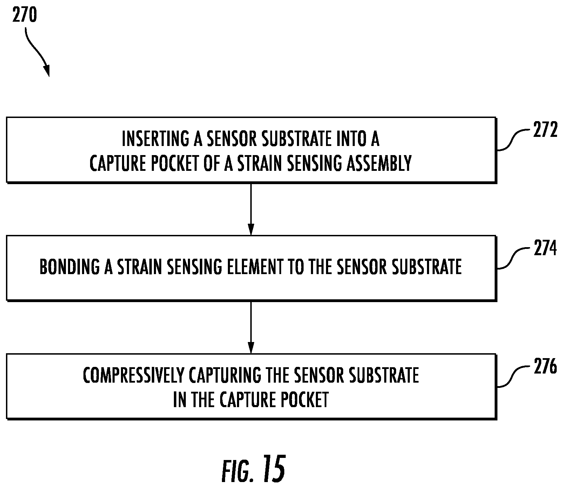

FIG. 15 discloses a method 270 for making a strain sensing assembly which includes, at step 272, of inserting a sensor substrate 208 into a capture pocket 215 of the strain sensing assembly 202. As mentioned above, the sensor substrate 208 can be made of quartz. The sensor substrate 208 can be inserted into the capture pocket 215 through a variety of actions, including being slidingly inserted. Step 274 includes bonding a strain sensing element 206 onto the sensor substrate 208. The strain sensing element 206 can be bonded to the sensor substrate 208 using a chemical bonding. The material of the chemical bonding can have modulus of elasticity of between 5 Gigapascals (GPA) - 200GPA in some applications, between 50GPA-150GPA in other applications, and between 75GPA-125GPA in other applications. In one form the chemical bonding is contemplated to have a bond thickness between 12µm-250µm. The chemical bonding material used to bond the sensor substrate 208 to the turbine engine component 204 is contemplated to have a glass transition temperature greater than 225C. In some embodiments, the chemical bonding material used to bond the sensor substrate 208 to the turbine engine component 204 can be cured in a zero stress state at a temperature corresponding to an expected operating temperature of the turbine engine component 204. In still other embodiments disclosed elsewhere herein, the sensor substate 208 may be mechanically retained against the turbine engine component 204 without use of a chemical bonding material. Step 276 includes compressively capturing the sensor substrate in the capture pocket 215. The capture pocket can be formed between a turbine engine component and a first fixture pin and second fixture pin.

The method 270 can also include heating a first fixture pin of the strain sensing assembly. Such heating can be used to increase the size of the capture pocket 215 to permit sliding insertion of the sensor substrate 208. The method 270 can also include engaging the first fixture pin 212 with a chamfered edge 230 of the sensor substrate 208. The chamfered edge 230 can be formed at the same angle as a capture angle 232 formed by a surface of the first fixture pin 212. The method 270 can also include bonding the sensor substrate 208 to the turbine engine component 204. The method 270 can also include coupling a lid 226 to the strain sensing element 206 such that the strain sensing element 206 is captured between the lid 226 and the sensor substrate 208.

Embodiments of the present disclosure are useful to capture a sensor substrate which can be configured to transfer strain from a turbine engine component to a strain sensing element coupled to the sensor substrate. A bonding material can be used to aid in transferring strain. The sensor substrate can be captured between a first fixture pin and a second fixture pin. The strain sensing assembly can be used in application that require higher limit of strain as well as more stringent lifetime and reliability requirements. Higher strain limits may also save on component weight during integration for the sensor. The disclosure herein increases accuracy of the sensor system by reduction of existing bonding material viscoelastic creep through a new mounting structure. This structure allows additional or alternate bonding materials to attach the sensor.

Further aspects are provided by the subject matter of the following clauses:
A strain sensing assembly comprising: a sensor substrate for coupling to a turbine engine component; a strain sensing element coupled to the sensor substrate, the strain sensing element configured to produce a signal indicative of a strain in the turbine engine component; and a first fixture pin and a second fixture pin configured to apply a compressive stress to the sensor substrate, the first fixture pin positioned on a first side of the sensor substrate and the second fixture pin positioned on a second side of the sensor substrate, the first side located opposite the second side.

A strain sensing assembly comprising: a sensor substrate for coupling to a rotatable shaft; a strain sensing element coupled to the sensor substrate, the strain sensing element configured to produce a signal indicative of a strain in the rotatable shaft; and a first fixture pin and a second fixture pin configured to apply a compressive stress to the sensor substrate, the first fixture pin positioned on a first side of the sensor substrate and the second fixture pin positioned on a second side of the sensor substrate, the first side located opposite the second side.

The strain sensing assembly of the preceding clause, wherein the sensor substrate includes a region that extends laterally beyond an outer periphery of the strain sensing element.

The strain sensing assembly of any of the preceding clauses, wherein the fixture pins are oriented to apply compressive stress to the region of the sensor substrate that extends laterally beyond the outer periphery of the strain sensing element.

The strain sensing assembly of any of the preceding clauses, which further includes a sensing element lid.

The strain sensing assembly of any of the preceding clauses, wherein the sensor substrate and the sensing element lid are made of a quartz material.

The strain sensing assembly of any of the preceding clauses, wherein the strain sensing element includes a surface acoustic wave (SAW) sensor or a bulk acoustic wave (BAW) sensor.

The strain sensing assembly of any of the preceding clauses, wherein the sensor substrate includes a thickness in a thickness direction, wherein the sensor substrate includes a lateral dimension in a lateral direction transverse to the thickness direction, wherein the first fixture pin forms a capture angle relative to the sensor substrate and toward an interior of the sensor substrate so as to capture the sensor substrate.

The strain sensing assembly of any of the preceding clauses, wherein the first fixture pin extends in the thickness direction and the lateral direction.

The strain sensing assembly of any of the preceding clauses, wherein the first fixture pin forms a capture angle relative to the sensor substrate to form a capture pocket structured to capture the sensor substrate.

The strain sensing assembly of any of the preceding clauses, wherein the sensor substrate includes a chamfered edge having a chamfered edge angle that matches the capture angle.

The strain sensing assembly of any of the preceding clauses, wherein the rotatable shaft is a shaft of a propulsion system.

The strain sensing assembly of any of the preceding clauses, wherein the rotatable shaft is one of a gearbox shaft, a power take-off shaft, a low pressure turbine shaft, a high pressure turbine shaft, a fan shaft, or an engine coupling shaft of the propulsion system.

The strain sensing assembly of any of the preceding clauses, wherein the first fixture pin is unitary with the turbine engine component.

The strain sensing assembly of any of the preceding clauses, wherein the first fixture pin is integrated with the turbine engine component.

The strain sensing assembly of any of the preceding clauses, wherein a bonding material is used to affix the sensor substrate to the turbine engine component.

The strain sensing assembly of any of the preceding clauses, wherein the bonding material at least partially encapsulates the sensor substrate.

A method of making a strain sensing assembly, the method comprising: inserting a sensor substrate into a capture pocket of the strain sensing assembly; bonding a strain sensing element to the sensor substrate; and compressively capturing the sensor substrate in the capture pocket.

The method of the preceding clause, further comprising heating a first fixture pin of the strain sensing assembly.

The method of any preceding clause, further comprising engaging a first fixture pin with a chamfered edge of the sensor substrate.

The method of any preceding clause, further comprising bonding the sensor substrate to a turbine engine component.

The method of any preceding clause, wherein inserting the sensor substrate into the capture pocket is performed after heating the capture pocket to a higher temperature than the sensor substrate.

The method of any preceding clause, which further includes expanding a bonding material to apply a compressive force associated with the compressively capturing the sensor substrate in the capture pocket.

The method of any preceding clause, further comprising deforming a first fixture pin to capture the sensor substrate.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A strain sensing assembly (202) comprising:
a sensor substrate (208) for coupling to a rotatable shaft (34, 36);
a strain sensing element (206) coupled to the sensor substrate (208), the strain sensing element (206) configured to produce a signal indicative of a strain in the rotatable shaft (34, 36); and
a first fixture pin (212) and a second fixture pin (214) configured to apply a compressive stress to the sensor substrate (208), the first fixture pin (212) positioned on a first side of the sensor substrate (208) and the second fixture pin (214) positioned on a second side of the sensor substrate (208), the first side located opposite the second side.

2. The strain sensing assembly (202) of claim 1, wherein the sensor substrate (208) includes a region (260) that extends laterally beyond an outer periphery of the strain sensing element (206).

3. The strain sensing assembly (202) of claim 2, wherein the fixture pins (212, 214) are oriented to apply compressive stress to the region (260) of the sensor substrate (208) that extends laterally beyond the outer periphery of the strain sensing element (206).

4. The strain sensing assembly (202) of any preceding claim, which further includes a sensing element lid (226).

5. The strain sensing assembly (202) of claim 4, wherein the sensor substrate (208) and the sensing element lid (226) are made of a quartz material.

6. The strain sensing assembly (202) of any preceding claim, wherein the strain sensing element (206) includes a surface acoustic wave (SAW) sensor or a bulk acoustic wave (BAW) sensor.

7. The strain sensing assembly (202) of any preceding claim, wherein the sensor substrate (208) includes a thickness in a thickness direction, wherein the sensor substrate (208) includes a lateral dimension in a lateral direction transverse to the thickness direction, wherein the first fixture pin (212) forms a capture angle (232) relative to the sensor substrate (208) and toward an interior of the sensor substrate (208 so as to capture the sensor substrate (208).

8. The strain sensing assembly (202) of claim 7, wherein the first fixture pin (212) extends in the thickness direction and the lateral direction.

9. The strain sensing assembly (202) of any preceding claim, wherein the first fixture pin (212) forms a capture angle (232) relative to the sensor substrate (208) to form a capture pocket (215) structured to capture the sensor substrate (208).

10. The strain sensing assembly (202) of claim 9, wherein the sensor substrate (208) includes a chamfered edge (230) having a chamfered edge angle that matches the capture angle (232).

11. The strain sensing assembly (202) of any preceding claim, wherein the rotatable shaft (34, 36) is a shaft of a propulsion system.

12. The strain sensing assembly (202) of claim 11, wherein the rotatable shaft (34, 36) is one of a gearbox shaft, a power take-off shaft, a low pressure turbine shaft, a high pressure turbine shaft, a fan shaft, or an engine coupling shaft of the propulsion system.

13. The strain sensing assembly (202) of any preceding claim 1, wherein the first fixture pin (212) is unitary with a turbine engine component.

14. A method of making a strain sensing assembly (202), the method comprising:
inserting a sensor substrate (208) into a capture pocket (215) of the strain sensing assembly (202);
bonding a strain sensing element (206) to the sensor substrate (208); and
compressively capturing the sensor substrate (208) in the capture pocket (215).

15. The method of claim 14, further comprising heating a first fixture pin (212) of the strain sensing assembly (202), and/or the method further comprising engaging a first fixture pin (212) with a chamfered edge (230) of the sensor substrate (208), and/or the method further comprising bonding the sensor substrate (208) to a turbine engine component, and/or the method wherein inserting the sensor substrate (208) into the capture pocket (215) is performed after heating the capture pocket (215) to a higher temperature than the sensor substrate (208), and/or the method further includes expanding a bonding material to apply a compressive force associated with the compressively capturing the sensor substrate (208) in the capture pocket (215), and/or the method further comprising deforming a first fixture pin (212) to capture the sensor substrate (208).
